# EUROPÄISCHE PATENTSCHRIFT

(11) **EP 1 537 149 B1**
(45) Veröffentlichungstag und Bekanntmachung des Hinweises auf die Patenterteilung: **29.06.2016**
(21) Anmeldenummer: 03794891.6
(22) Anmeldetag: 19.08.2003
(51) Int. Cl.: C08J 3/24, C08B 11/20, C08B 15/00

(54) **VERFAHREN ZUM HERSTELLEN VON REVERSIBEL VERNETZTEN CELLULOSEETHERN**
METHOD FOR PRODUCING REVERSIBLY CROSS-LINKED CELLULOSE ETHERS
PROCÉDÉ DE PRODUCTION D'ÉTHERS DE CELLULOSE RÉTICULÉS DE MANIÈRE RÉVERSIBLE

(30) Priorität: 28.08.2002 DE 10239442
(43) Veröffentlichungstag der Anmeldung: 08.06.2005
(73) Patentinhaber: SE Tylose GmbH & Co.KG, 65203 Wiesbaden (DE)
(72) Erfinder: PERPLIES, Eberhard, 65396 Walluf (DE); ERDLER, Manfred, 65719 Hofheim (DE)
(74) Vertreter: Plate, Jürgen
(86) Internationale Anmeldenummer: PCT/EP2003/009150
(87) Internationale Veröffentlichungsnummer: WO 2004/024775

(56) Entgegenhaltungen:
- EP-A- 0 252 649
- EP-A- 1 180 529
- DE-A- 3 103 338
- US-A- 4 366 070

## Beschreibung

Die vorliegende Erfindung betrifft ein Verfahren zum Herstellen von temporär vernetzten Celluloseethern mit verbesserter, klumpenfreier Einrührbarkeit und Anquellverzögerung beim Einrühren in wässrige Lösungen.

Die Herstellung von Celluloseethern mit einheitlichen oder unterschiedlichen Substituenten ist bekannt z.B. aus Ullmann's Enzyklopädie der Technischen Chemie, Bd. 9, "Celluloseether", Verlag Chemie, Weinheim, 4. Auflage 1975, S. 192 ff.

Zur Herstellung dieser Celluloseether, wie zum Beispiel Methylcellulose, Ethylcellulose, Carboxymethylcellulose, Hydroxyethylcellulose, Hydroxypropylcellulose, Methylhydroxyethylcellulose, Methylhydroxypropylcellulose und Ethylhydroxyethylcellulose, wird das Ausgangsmaterial, die Cellulose, zunächst zur Vergrößerung ihrer Oberfläche gemahlen, wobei die Teilchengröße in der Regel kleiner als 2,5 mm, möglichst sogar kleiner als 1 mm sein sollte. Das resultierende, voluminöse Cellulosepulver wird durch Zugabe von Base, wie zum Beispiel NaOH, KOH, LiOH und/oder NH₄OH, in fester oder flüssiger Form, in "Alkalicellulose" überführt. Es schließt sich, mit oder ohne Isolierung der Alkalicellulose, eine ein- oder mehrstufige, kontinuierliche oder diskontinuierliche Veretherung mit den entsprechenden Reagenzien an. Die resultierenden Celluloseether werden mit Wasser oder geeigneten Lösungsmittelgemischen auf bekannte Weise von Reaktionsnebenprodukten gereinigt, getrocknet, gemahlen und gegebenenfalls mit anderen Komponenten abgemischt.

Trotz guter Löslichkeit dieser Celluloseether in kaltem Wasser stellt die Herstellung wässriger Lösungen derselben häufig ein Problem dar. Das gilt insbesondere dann, wenn der Celluloseether als feines Pulver mit vergrößerter Oberfläche vorliegt. Kommt ein solches Celluloseether-Pulver mit Wasser in Berührung, so quellen die einzelnen Körnchen und ballen sich zu größeren Agglomeraten zusammen, deren Oberfläche gelartig verdickt ist. Es befindet sich jedoch, abhängig von der Mischintensität, ein gewisser Anteil völlig unbenetzten Celluloseethers im Inneren dieser Agglomerate. Ein vollständiges Lösen dieser Agglomerate kann, in Abhängigkeit von der Viskosität der resultierenden Lösung und der durchschnittlichen Polymer-Kettenlänge, bis zu 24 Stunden in Anspruch nehmen.

Um die bei der Herstellung wässriger Lösungen von Celluloseethern auftretende Verklumpung zu vermindern, können die Celluloseether mit Tensiden behandelt werden, wie z.B. in der US-A-2 720 464 beschrieben.

Darüber hinaus ist es für einige Anwendungen wünschenswert, eine gewisse offene Zeit von wenigen Sekunden bis zu mehreren Stunden zu haben. Offene Zeit oder auch Anquellverzögerung (AQV) bedeutet, dass nach Mischung der Komponenten inklusive Celluloseether noch eine gewisse Zeit vergeht, bis der Celluloseether, dann aber möglichst schlagartig, die Viskosität des Gemisches erhöht.

Die Kombination Verhinderung der Verklumpung des Celluloseethers und offene Zeit AQV wird chemisch über eine Vernetzung von Celluloseethern erreicht. Vernetzung bedeutet in diesem Zusammenhang die Verknüpfung von mindestens zwei ansonsten getrennt verlaufenden Polymerketten über bi- oder polyfunktionelle Moleküle, wie z.B. Dialdehyde wie Glyoxal (Stand der Technik), Glutaraldehyd oder strukturell verwandte Verbindungen sowie Diester, Dicarbonsäuren, Dicarbonsäureamide und Anhydride.

Man erzeugt durch die Umsetzung freier Hydroxylgruppen des Celluloseethers mit Aldehyden unter Bildung von Halbacetalen eine partielle, reversible Vernetzung, die beim Lösen des vernetzten Celluloseethers in neutralem oder schwach saurem Wasser mit Zeitverzögerung wieder aufgespalten wird. Das Ergebnis ist ein sprunghafter Viskositätsanstieg ohne Verklumpung nach dem Verteilen des Pulvers im wässrigen Medium sowie einer definierten offenen Zeit AQV, die über den Grad der Vernetzung durch die Menge zugesetzten Vernetzungsreagenzes gesteuert werden kann.

Der genaue Mechanismus der Vernetzung mit unterschiedlichen Dialdehyden bei der Vernetzung von Hydroxypropylcellulose wird von S. Suto et al. in Journal of Material Science 28 (1993), S. 4644 bis 4650 ausführlich beschrieben. In den beschriebenen Beispielen werden stets niedermolekulare chemische Verbindungen bei der Vernetzung eingesetzt, die, sollte sich die Vernetzung gezielt wieder lösen lassen, wieder als niedermolekulare Verbindungen in der wässrigen Lösung des Celluloseethers auftreten. Besonders kritisch ist dies bei dem allgemein gebräuchlichen Vernetzungsmitten Glyoxal, weil Glyoxal in den letzten Jahren toxikologisch neu bewertet und dabei als mutagen Cat. 3 und sensibilisierende Substanz eingestuft wurde. Gemäß einer neuen "EG Directive on dangerous preparations" müssen Zubereitungen, die mindestens 0,1 % einer sensibilisierenden Substanz enthalten, ab dem 30.7.2002 mit dem Vermerk versehen sein: "Enthält Glyoxal. Kann allergische Reaktionen hervorrufen".

Aufgabe der vorliegenden Erfindung war es also, ein Verfahren zu entwickeln, mit dem sich Celluloseether reversibel vernetzen lassen und das ohne die Verwendung von Glyoxal auskommt, das Vernetzungsreagenz beim Auflösen in Wasser nicht mehr abspaltet und darüber hinaus in der großtechnischen Produktion von vernetzten Celluloseethern nicht zu aufwändigen und kostenintensiven Umbauten oder zusätzlichen Behandlungsschritten führt.

Gelöst wird diese Aufgabe durch ein Verfahren der eingangs genannten Gattung gemäß Anspruch 1 dessen Kennzeichenmerkmale darin bestehen, dass Celluloseether mit freien OH-Gruppen zunächst mit chemischen Verbindungen, die mindestens eine Aldehydgruppe und mindestens eine Säuregruppe enthalten, versetzt werden und dass dann die Säuregruppen und Aldehydgruppen der chemischen Verbindungen mit den OH-Gruppen der Celluloseether zur Reaktion gebracht werden.

Die Reaktion der Säuregruppen und der Aldehydgruppen der chemischen Verbindungen mit den OH-Gruppen der Celluloseether führt vorzugsweise zu einer Ester- oder Halbacetalbindung.

Die Menge an chemischer Verbindung, die mindestens eine Aldehydgruppe und mindestens eine Säuregruppe enthält, liegt erfindungsgemäß im Bereich von 0,01 bis 0,1 mol pro mol Celluloseether.

Der besondere Vorteil der vorliegenden Erfindung liegt darin, dass beim Auflösen der vernetzten Celluloseether in Wasser von den erfindungsgemäß vernetzten Celluloseethern keine niedermolekulare Substanz mehr abgespalten wird, da die Estergruppe weiterhin intakt bleibt, und dass deshalb Probleme im Zusammenhang mit der toxikologischen Bedenklichkeit der Abspaltprodukte gar nicht erst auftreten können.

Als geeignete chemische Verbindung mit mindestens einer Aldehydgruppe und mindestens einer Säuregruppe kommt erfindungsgemäß bevorzugt eine Verbindung mit der allgemeinen chemischen Formel

HOC-[X]_{y}-COOH

zum Einsatz, in der X für eine zweiwertige Alkylengruppe mit 1 bis 6 C-Atomen steht, die gesättigt und gradkettig oder verzweigt sein kann, oder für eine zweiwertige gesättigte Cyclo- oder Bicycloalkylengruppe mit 3 bis 10 C-Atomen oder für eine zweiwertige Arylengruppe mit 6 bis 10 C-Atomen, wobei diese Gruppen noch einen oder mehrere Substituenten R tragen können, die neben Wasserstoff auch Alkylreste mit bis zu 4 C-Atomen, Oxyalkylreste mit bis zu 4 C-Atomen, OH-Gruppen, Halogene, Nitrogruppen, Nitrilgruppen oder Mischungen von diesen sein können, und in der y entweder 0, 1 oder 2 sein kann.

In einer bevorzugten Ausführungsform der Erfindung ist y in der allgemeinen chemischen Formel gleich 0 und die Verbindung ist die technisch problemlos zugängliche Glyoxylsäure.

In einer weiter bevorzugten Ausführungsform des erfindungsgemäßen Verfahrens wird der handelsübliche Celluloseether mit Wasser angefeuchtet oder in einem organischen Suspensionsmittel suspendiert, ohne darin in Lösung zu gehen. Der Wassergehalt des angefeuchteten Celluloseethers liegt dabei im Bereich zwischen 10 und 80 %, vorzugsweise zwischen 40 und 70 %, bei einem Gemisch aus Celluloseether und organischem Suspensionsmittel vorzugsweise zwischen 30 und 60 %, bezogen auf die eingesetzte Menge an Celluloseether.

In diese Mischung wird die chemische Verbindung mit mindestens einer Aldehydgruppe und mindestens einer Säuregruppe gegeben und über eine Zeitdauer im Bereich von 1 bis 60 min, vorzugsweise von 20 bis 40 min homogen eingearbeitet.

Die anschließende Reaktion der Aldehydgruppen und der Säuregruppen mit den OH-Gruppen der Celluloseether erfolgt bei Temperaturen im Bereich von 50 bis 150°C, bevorzugt im Bereich von 60 bis 130°C, über eine Zeitdauer von 1 bis 120 min, vorzugsweise von 10 bis 90 min. Die genaue Zeitdauer ist abhängig von der Intensität des Trockenvorganges, d.h. von der Leistungsfähigkeit des Trockners.

Als organische Suspensionsmittel, in denen die Vernetzung der Celluloseether durchgeführt werden können, sind insbesondere Aceton, niedere Alkohole mit 1 bis 4 C-Atomen, Diethylether sowie Ether mit Alkylketten mit bis zu 8 Kohlenstoffatomen pro Kette geeignet, ebenso aber auch cyclische Ether wie Dihydropyran, Dihydrofuran, Tetrahydrofuran oder Dioxan, Ethylenglycoldimethylether, Diethylenglycoldimethylether, Triethylenglycoldimethylether, Tetraethylenglycoldimethylether, geradkettige und verzweigte Kohlenwasserstoffe mit bis zu 12 Kohlenstoffatomen sowie cyclische Verbindungen wie Cyclopentan oder Cyclohexan oder aromatische Verbindungen wie Toluol, Benzol, oder alkylsubstituierte Toluole oder Benzole.

Denkbar ist auch, im wesentlichen trockene, pulverförmige Celluloseether mit einer Lösung, bestehend dem Vernetzer in einem nucleophilen organischen Lösungsmittel oder in Wasser durch intensives Vermischen, z.B. in einem gängigen Mischaggregat, in Kontakt zu bringen.

Die oben geschilderte Umsetzung von Celluloseethern mit Aldehyd- und Säuregruppen enthaltenden niedermolekularen Stoffen führt zu Celluloseethern, die gut einrührbar sind, ohne dass Verklumpungen zu befürchten sind, bevor nach einer definierten AQV eine spürbare Viskositätsentwicklung im neutralen pH-Bereich einsetzt.

Die Länge der AQV hängt von der eingesetzten Art und Menge der Vernetzer ab und wird wesentlich beeinflusst durch die Höhe des pH-Wertes der herzustellenden Lösung. Je höher der pH-Wert, desto kürzer wird die AQV.

Das erfindungsgemäße Verfahren wird im folgenden anhand von Ausführungsbeispielen näher beschrieben, ohne auf die konkret dargestellten Ausführungsformen der Erfindung beschränkt zu sein.

Bestimmung der Viskosität:
In mPa.s angegebene Viskositäten werden bestimmt, indem 1,9 %ige wässrige Lösungen des entsprechenden Celluloseethers, bezogen auf den Trockengehalt unter Berücksichtigung der aktuellen Feuchte des Pulvers, mit einem Höppler-Kugelfallviskosimeter bei 20°C vermessen werden.

Bestimmung der Anquellverzögerung (AQV):
Die Messung der AQV wird mit einem Viskosimeter der Fa. Brabender bei 20°C untersucht und softwaregestützt ausgewertet. Die Angaben in [BE] beziehen sich dabei auf Brabender-Viskositätseinheiten, die direkt zu einer entsprechenden Viskosität in mPa.s proportional sind.

Die Celluloseether werden nach folgendem Verfahren umgesetzt und für eine Brabender-Messung vorbereitet:
Eine entsprechende Menge des modifizierten Celluloseethers, die abhängt von der zu erwartenden Viskosität, wird in Wasser von unterschiedlich eingestellten pH-Werten suspendiert. Die Messung wird bei Zugabe des Celluloseethers gestartet und bei einer Startviskosität von ca. 35 ± 2 BE (Brabender Einheiten) der Zeitpunkt bestimmt, an dem die Viskosität die doppelte Startviskosität überschreitet (Anquellverzögerung AQV), sowie der Zeitpunkt der maximalen Viskositätsentwicklung (Gel-Struktur) und der Zeitpunkt, zu dem die Viskosität praktisch der effektiven Endviskosität entspricht.

### Beispiel 1

400 g Methylhydroxyethylcellulose mit einer 60 000er Viskositätsstufe und einer Wasserfeuchte von 45 % wurden mit 200 g Eis, 2,2 g Zitronensäure, 1,84 g Natronlauge (50 % in Wasser) und 7,5 g Glyoxylsäure (50 % in Wasser) intensiv für 30 Minuten vermischt, mit einem Desintegrator zerkleinert und feucht gemahlen. Das gemahlene Produkt wurde eine Stunde lang bei einer Temperatur von 105°C getrocknet.

Das fertige Produkt hatte eine Anquellverzögerung von 4,5 min und eine Endlösezeit bis zur vollen Viskositätsentwicklung von 27 min. Eine chemische Analyse ergab, dass Glyoxylsäure nicht auswaschbar war.

### Beispiel 2

500 g 85 %iges Isopropanol wurden in einem temperierbaren Rührgefäß vorgelegt. Dazu wurden 250 g einer lösungsmittelfeuchten Hexylethylcellulose (HEC) (ca. 100 g Trockensubstanz) gegeben und mit einem Hochleistungsrührer homogen verteilt. Dieser Mischung wurden dann 1,9 g Glyoxylsäure (50 %ig) zugegeben, wobei sich ein pH-Wert von 4,5 einstellte. Die Suspension wurde intensiv durchmischt und anschließend über eine Filternutsche abgesaugt.

Das Produkt wurde eine Stunde lang unter reduziertem Druck von 100 hPa und bei einer Temperatur von 40°C vorgetrocknet, um das Lösungsmittel zu entfernen, in einem Mischaggregat grob zerkleinert und anschließend bei 105°C eine Stunde lang getempert. Das Produkt wurde dann auf einer geeigneten Mühle auf eine mittlere Korngröße von kleiner/gleich 250 µm gemahlen. Ergebnis: Anquellverzögerung = 5 min, Endlösezeit = 18 min.

## Patentansprüche

1. Verfahren zum Herstellen von reversibel vernetzten Celluloseethern mit klumpenfreier Einrührbarkeit und Anquellverzögerung beim Einrühren in wässrige Lösungen, bei dem Celluloseether mit freien OH-Gruppen zunächst mit chemischen Verbindungen, die mindestens eine Aldehydgruppe und mindestens eine Säuregruppe enthalten, über eine Zeitdauer von 10 bis 60 min in Wasser oder in einem organischen Suspensionsmittel bei einer Temperatur im Bereich von 0 bis 40 °C versetzt werden und bei dem die Säuregruppen und Aldehydgruppen der chemischen Verbindungen dann mit den OH-Gruppen der Celluloseether unter Ausbildung einer Ester- oder Halbacetalbindung zur Reaktion gebracht werden, wobei der Celluloseether in dem Wasser oder dem Suspensionsmittel nicht gelöst wird, wobei die chemischen Verbindungen, die mindestens eine Aldehydgruppe und mindestens eine Säuregruppe enthalten, beim Auflösen des reversibel vernetzten Celluloseethers in Wasser nicht abgespalten werden.

2. Verfahren nach Anspruch 1, dadurch gekenntzeichnet, dass als chemische Verbindung mit mindestens einer Säuregruppe und mindestens einer Aldehydgruppe eine Verbindung mit der allgemeinen chemischen Formel
HOC-[X]_{y}-COOH
eingesetzt wird, in der X für eine zweiwertige Alkylengruppe mit 1 bis 6 C-Atomen steht, die gesättigt und gradkettig oder verzweigt sein kann, oder für eine zweiwertige gesättigte Cyclo- oder Bicycloalkylengruppe mit 3 bis 10 C-Atomen oder für eine zweiwertige Arylengruppe mit 6 bis 10 C-Atomen, wobei diese Gruppen noch einen oder mehrere Substituenten R tragen können, die neben Wasserstoff auch Alkylreste mit bis zu 4 C-Atomen, Oxyalkylreste mit bis zu 4 C-Atomen, OH-Gruppen. Halogene, Nitrogruppen, Nitrilgruppen oder Mischungen von diesen sein können, und in der y entweder 0, 1 oder 2 sein kann.

3. Verfahren nach Anspruch 1 oder 2, **dadurch gekennzeichnet, dass** als chemische Verbindung mit mindestens einer Säuregruppe und mindestens einer Aldehydgruppe Glyoxylsäure eingesetzt wird.

4. Verfahren nach einem oder mehreren der Ansprüche 1 bis 3, **dadurch gekennzeichnet, dass** die Menge an chemischer Verbindung, die mindestens eine Aldehydgruppe und mindestens eine Säuregruppe enthält, im Bereich von 0,01 bis 0,1 mol pro mol Celluloseether liegt.

5. Verfahren nach einem oder nach mehreren der Ansprüche 1 bis 4, **dadurch gekennzeichnet, dass** als Celluloseether mit freien OH-Gruppen Methylcellulose, Ethylcellulose, Carboxymethylcellullose, Hydroxyethylcellulose, Hydroxypropylcellulose, Methylhydroxyethylcellulose, Methylhydroxypropylcellulose oder Ethylhydroxyethylcellulose eingesetzt werden.

6. Verfahren nach einem oder nach mehreren der Ansprüche 1 bis 5, **dadurch gekennzeichnet, dass** das Versetzen der Celluloseether mit der Verbindung, die mindestens eine Aldehydgruppe und mindestens eine Säuregruppe enthält, über eine Zeitdauer im Bereich von 10 bis 60 min erfolgt.

7. Verfahren nach einem oder nach mehreren der Ansprüche 1 bis 6, **dadurch gekennzeichnet, dass** die Reaktion der Säuregruppen und der Aldehydgruppen mit den OH-Gruppen der Celluloseether bei einer Temperatur im Bereich von 50 bis 150°C, über eine Zeitdauer im Bereich von 1 bis 120 min, erfolgt.

8. Verfahren nach einem oder nach mehreren der Ansprüche 1 bis 7, **dadurch gekennzeichnet, dass** als organische Suspensionsmittel, in denen das Versetzen der Celluloseether mit der chemischen Verbindung, die mindestens eine Aldehydgruppe und mindestens eine Säuregruppe enthält, erfolgt, Aceton, niedere Alkohole mit 1 bis 4 C-Atomen, Diethylether sowie Ether mit Alkylketten mit bis zu 8 C-Atomen pro Kette eingesetzt werden oder cyclische Ether, Ethylenglycoldimethylether, Diethylenglycoldimethylether, Triethylenglycoldimethylether, Tetraethylenglycoldimethylether oder geradkettige und verzweigte Kohlenwasserstoffe mit bis zu 12 C-Atomen oder cyclische Verbindungen oder aromatische Verbindungen.

## Claims

1. Method for producing reversibly crosslinked cellulose ethers having lump-free stirrability and solvation delay on stirring into aqueous solutions, in which cellulose ethers having free OH groups are first admixed over a time period of from 10 to 60 min in water or in an organic suspension medium at a temperature in the range from 0 to 40 °C with chemical compounds containing at least one aldehyde group and at least one acid group, and in which the acid groups and aldehyde groups of the chemical compounds are then reacted with the OH groups of the cellulose ethers to form an ester bond or hemiacetal bond, the cellulose ether not being dissolved in the water or the suspension medium, the chemical compounds containing at least one aldehyde group and at least one acid group not being eliminated on dissolution of the reversibly crosslinked cellulose ether in water.

2. Method according to Claim 1, **characterized in that** the chemical compound having at least one acid group and at least one aldehyde group is a compound of the general chemical formula
HOC- [X]_{y}-COOH,
where X is a divalent alkylene group which has from 1 to 6 carbon atoms and can be saturated and straight-chain or branched, or a divalent saturated cyclo- or bicycloalkylene group having from 3 to 10 carbon atoms, or a divalent arylene group having from 6 to 10 carbon atoms, where these groups can further bear one or more substituents R which, in addition to hydrogen, can also be alkyl radicals having up to 4 carbon atoms, oxyalkyl radicals having up to 4 carbon atoms, OH groups, halogens, nitro groups, nitrile groups or mixtures thereof, and where y can be either 0, 1 or 2.

3. Method according to Claim 1 or 2, **characterised in that** the chemical compound having at least one acid group and at least one aldehyde group is glyoxylic acid.

4. Method according to one or more of Claims 1 to 3, **characterized in that** the amount of chemical compound containing at least one aldehyde group and at least one acid group is in the range from 0.01 to 0.1 mol per mole of cellulose ether.

5. Method according to one or more of Claims 1 to 4, **characterized in that**, as cellulose ethers having free OH groups, use is made of methylcellulose, ethylcellulose, carboxymethylcellulose, hydroxyethylcellulose, hydroxypropylcellulose, methyl hydroxyethylcellulose, methyl hydroxypropylcellulose or ethyl hydroxyethylcellulose.

6. Method according to one or more of Claims 1 to 5, **characterized in that** the cellulose ethers are admixed with the compound containing at least one aldehyde group and at least one acid group over a time period in the range of from 10 to 60 min.

7. Method according to one or more of Claims 1 to 6, **characterized in that** the acid groups and the aldehyde groups are reacted with the OH groups of the cellulose ethers at a temperature in the range from 50 to 150 °C, over a time period in the range of from 1 to 120 min.

8. Method according to one or more of Claims 1 to 7, **characterized in that**, as organic suspension media in which the cellulose ethers are admixed with the chemical compound containing at least one aldehyde group and at least one acid group, use is made of acetone, lower alcohols having from 1 to 4 carbon atoms, diethyl ether and also ethers having alkyl chains having up to 8 carbon atoms per chain, or cyclic ethers, ethylene glycol dimethyl ether, diethylene glycol dimethyl ether, triethylene glycol dimethyl ether, tetraethylene glycol dimethyl ether or straight-chain and branched hydrocarbons having up to 12 carbon atoms or cyclic compounds, or aromatic compounds.

## Revendications

1. Procédé de fabrication d'éthers de cellulose réticulés de manière réversible avec une possibilité de délayage sans grumeaux et avec un retard de gonflement lors du délayage dans des solutions aqueuses, selon lequel des éthers de cellulose avec des groupes OH libres sont d'abord mélangés avec des composés chimiques, qui contiennent au moins un groupe aldéhyde et au moins un groupe acide, pendant 10 à 60 minutes dans de l'eau ou dans un agent de suspension organique à une température comprise entre 0 et 40°C et selon lequel les groupes acides et les groupes aldéhydes des composés chimiques sont ensuite amenés à réagir avec les groupes OH des éthers de cellulose en formant une liaison ester ou hémiacétal, l'éther de cellulose n'étant pas dissous dans l'eau ou dans l'agent de suspension et les composés chimiques qui contiennent au moins un groupe aldéhyde et au moins un groupe acide n'étant pas séparés dans l'eau lors de la décomposition de l'éther de cellulose réticulé de manière réversible.

2. Procédé selon la revendication 1, **caractérisé en ce que**, comme composé chimique contenant au moins un groupe aldéhyde et au moins un groupe acide, on utilise un composé ayant la formule chimique générale
HOC- [X]_{y}-COOH
dans laquelle X représente un groupe alkyle bivalent avec 1 à 6 atomes C, qui peut être saturé et en chaîne linéaire ou ramifié, ou un groupe alkyle cyclique ou bicyclique bivalent, saturé, avec 3 à 10 atomes C, ou un groupe aryle bivalent avec 6 à 10 atomes C, ces groupes pouvant encore porter un ou plusieurs substituants R qui peuvent être, outre de l'hydrogène, des radicaux alkyles avec jusqu'à 4 atomes C, des radicaux oxyalkyles avec jusqu'à 4 atomes C, des groupes OH, des halogènes, des groupes nitro, des groupes nitriles, ou des mélanges de ceux-ci, et dans laquelle y peut être 0, 1 ou 2.

3. Procédé selon la revendication 1 ou 2, **caractérisé en ce que**, comme composé chimique contenant au moins un groupe acide et au moins un groupe aldéhyde, on utilise de l'acide glyoxylique.

4. Procédé selon une ou plusieurs des revendications 1 à 3, **caractérisé en ce que** la quantité de composé chimique qui continent au moins un groupe aldéhyde et au moins un groupe acide est comprise entre 0,01 et 0,1 mol par mol d'éther de cellulose.

5. Procédé selon une ou plusieurs des revendications 1 à 4, **caractérisé en ce que**, comme éther de cellulose avec des groupes OH libres, on utilise de la cellulose méthylique, de la cellulose éthylique, de la cellulose carboxyméthylique, de la cellulose hydroxyéthylique, de la cellulose hydroxypropylique, de la cellulose méthylique hydroxyéthylique, de la cellulose méthylique hydroxypropylique ou de la cellulose éthylique hydroxyéthylique.

6. Procédé selon une ou plusieurs des revendications 1 à 5, **caractérisé en ce que** le mélange de l'éther de cellulose avec le composé chimique qui contient au moins un groupe aldéhyde et au moins un groupe acide s'effectue pendant 10 à 60 minutes.

7. Procédé selon une ou plusieurs des revendications 1 à 6, **caractérisé en ce que** la réaction des groupes acides et des groupes aldéhydes avec les groupes OH des éthers de cellulose s'effectue à une température comprise entre 50 et 150°C pendant 1 à 120 minutes.

8. Procédé selon une ou plusieurs des revendications 1 à 7, **caractérisé en ce que**, comme agent de suspension organique dans lequel s'effectue le mélange des éthers de cellulose avec le composé chimique qui contient au moins un groupe aldéhyde et au moins un groupe acide, on utilise de l'acétone, des alcools inférieurs avec 1 à 4 atomes C, des éthers diéthyliques ainsi que des éthers avec des chaînes alkyles avec jusqu'à 8 atomes C par chaîne ou des éthers cycliques, éther diméthylique d'éthylène glycol, éther diméthylique de diéthylène glycol, éther diméthylique de triéthylène glycol, éther diméthylique de tétraéthylène glycol, ou des hydrocarbures en chaîne linéaire ou ramifié avec jusqu'à 12 atomes C, ou des composés cycliques, ou des composes aromatiques.
